Europäisches Patentamt

European Patent Office

Office européen des brevets

(19)

(11) Veröffentlichungsnummer: **0 023 292**

**A1**

(12) **EUROPÄISCHE PATENTANMELDUNG**

(21) Anmeldenummer: **80103952.0**

(22) Anmeldetag: **10.07.80**

(51) Int. Cl.³: **C 08 B 1/08**

(30) Priorität: **18.07.79 DE 2929002**

(43) Veröffentlichungstag der Anmeldung:
**04.02.81 Patentblatt 81/5**

(84) Benannte Vertragsstaaten:
**AT BE CH DE FR GB IT LI NL SE**

(71) Anmelder: **Henkel Kommanditgesellschaft auf Aktien -Patentabteilung- Postfach 1100 Henkelstrasse 67 D-4000 Düsseldorf 1(DE)**

(72) Erfinder: **Wüst, Willi, Dr.
Fasanenring 32
D-4030 Ratingen-Hösel(DE)**

(72) Erfinder: **Leischner. Hasso
Böcklinstrasse 10
D-4000 Düsselforf 1(DE)**

(72) Erfinder: **Rähse, Wilfried, Dr.
Kohlhagenstrasse 44
D-4000 Düsseldorf 13(DE)**

(72) Erfinder: **Carduck, Franz-Josef, Dr.
Landstrasse 18
D-5657 Haan(DE)**

(72) Erfinder: **Kühne, Norbert
Feuerbachstrasse 9
D-5657 Haan(DE)**

(54) Verfahren zur Herstellung von Cellulosederivaten mittels besonders reaktiver Alkalicellulose.

(57) Verfahren zur Herstellung von Cellulosederivaten durch Umsetzen von feinverteilter, insbesondere pulverförmiger Cellulose mit wäßrig-alkoholischer Alkalilauge bei Temperaturen zwischen etwa 20 und 120°C, insbesondere 20 und 80°C, wobei nach Entfernen des Sauerstoffs sowie Absenken des Wassergehaltes durch Abdestillieren bei reduziertem Druck auf 2,5 bis 6,0 Mol Wasser pro Anhydroglycoseeinheit in an sich bekannter Weise alkyliert sowie aufgearbeitet wird. Die Pulvercellulose soll einen mittleren Korndurchmesser zwischen 20 und 120μm, vorzugsweise zwischen 40 und 60 μm, aufweisen und als Alkohol ein niederer primärer und oder sekundärer Monoalkohol mit 1 bis 5 Kohlenstoffatomen, insbesondere Methanol und/oder Ethanol verwendet werden.

COMPLETE DOCUMENT

HENKEL KGaA
ZR-FE/Patente
Dr.SchOe/Bk

P a t e n t a n m e l d u n g

D 5753 EP

Verfahren zur Herstellung von Cellulosederivaten
mittels besonders reaktiver Alkalicellulose

---

Die vorliegende Erfindung betrifft ein Verfahren zur Herstellung von Cellulosederivaten durch Umsetzen von besonders reaktiver Alkalicellulose mit Veretherungsmitteln.

Aus der Literatur ist es bekannt, daß die Herstellung von reaktiver, gleichmäßig alkalisierter Cellulose und gleichmäßig substituierten Cellulosederivaten große Schwierigkeiten bereitet. Nach einem altbekannten und weitverbreiteten Verfahren zur Erzeugung von Alkalicellulose werden Zellstoffbahnen oder -platten in ca. 20- bis 50-%iger Natronlauge getränkt. Die überschüssige Lauge wird nach dieser Tauchalkalisierung abgepreßt (DBP 977 104). Beim Alkalisieren in Mischsystemen läßt sich die benötigte Menge an Natronlauge durch Aufsprühen genauer einstellen (DE-OS 26 35 403).

Diese beiden genannten Verfahren liefern aber eine ungleichmäßige Verteilung des Alkalis auf der Cellulose, was sich nach der Umsetzung mit Veretherungsmitteln durch eine ungleichmäßige Substitution bemerkbar macht. Derart hergestellte Produkte erreichen daher nicht die guten Löseeigenschaften von gleichmäßig substituierten Celluloseethern. In Kenntnis dieser Zusammenhänge hat man die Cellulose vor der Alkalisierung gemahlen, um eine große

/2

Oberfläche und eine hohe Reaktionsgeschwindigkeit zu erhalten. Doch bereits das teilalkalisierte Cellulosepulver quillt stark an und bildet Klumpen, so daß eine homogene Verteilung der Alkalilauge auf dem Pulver nicht gewährleistet ist. Man ist gezwungen, für die Alkalisierung von faseriger oder pulveriger Cellulose beispielsweise eine Schneckenpresse zur Homogenisierung und Förderung des Materials einzusetzen (DE-AS 15 43 114) oder in Gegenwart des Veretherungsmittels in einem Mischer zu arbeiten (DE-OS 26 35 403).

Das Alkalisieren in Gegenwart des Veretherungsmittels, wie beispielsweise Methylchlorid, erfordert jedoch einen druckfesten Apparat, da sich in Abhängigkeit von der Temperatur ein beträchtlicher Überdruck aufbaut. Unter diesen Bedingungen kann eine Aufschlämmung aus Cellulosepulver, Natronlauge und Methylchlorid hergestellt werden (DE-OS 26 36 935). Das Ansetzen einer derartigen Aufschlämmung ist aber nicht gleichzusetzen mit der Herstellung von gleichmäßig alkalisierter Cellulose.

Aufgabe der vorliegenden Erfindung war es, die Qualität der Alkalicellulose und damit der Celluloseether, insbesondere von Methylcellulose beziehungsweise Hydroxyalkylcellulose bzw. der Acylcellulose zu verbessern. Auch sollten die Ausbeuten, insbesondere hinsichtlich der eingesetzten Menge an Natriumhydroxid, gesteigert werden. Das neue Verfahren zur Herstellung von besonders reaktiver Alkalicellulose zeichnet sich durch seine breite Anwendungsmöglichkeit bei den bekannten Nachfolgereaktionen aus.

Erfindungsgemäß ist das neue Verfahren dadurch gekennzeichnet, daß feinverteilte, insbesondere pulverförmige Cellulose mit wäßrig-alkoholischer Alkalilauge bei Tem-

/3

peraturen zwischen etwa 20° und 120° C, insbesondere 30° und 80° C, in Alkalicellulose überführt wird, die nach Entfernen des Sauerstoffs sowie Absenken des Wassergehalts auf 2,5 bis 6,0 Mol pro Anhydroglycoseeinheit in an sich bekannter Weise alkyliert sowie aufgearbeitet wird.

Die Reaktion zwischen der Cellulose und dem Alkalihydroxid zur Bildung der Alkalicellulose ist exotherm, das heißt, daß die gebildete Reaktionswärme entweder das Reaktionsgemisch aufheizt oder abgeführt werden muß. Für die Herstellung der erfindungsgemäßen, besonders reaktiven Alkalicellulose muß der genannte, bestimmte Temperaturbereich eingehalten werden. Zweckmäßigerweise wird eine weitgehend zerkleinerte, vorzugsweise pulverförmige Cellulose eingesetzt, die einen mittleren Korndurchmesser zwischen 20 und 120 μ, vorzugsweise zwischen 40 und 60 μm, aufweist. Es ist möglich, die verschiedenartigsten Cellulosesorten zu verwenden.

Es hat sich gezeigt, daß mit zunehmendem durchschnittlichen Polymerisationsgrad (DP) der eingesetzten Pulvercellulose die Viskosität der wäßrigen Lösung des hergestellten Ethers steigt. Das eingesetzte Alkali soll möglichst konzentriert sein und einen Gehalt an Hydroxid von etwa 30 bis 70 %, bezogen auf die Gesamtmenge Hydroxid und Wasser, aufweisen. Als Alkali werden meist Kalium- und Natriumhydroxid eingesetzt, wobei das letztere aus wirtschaftlichen Gründen bevorzugt wird. Selbstverständlich können auch Gemische von Alkalihydroxiden Verwendung finden. Die einzusetzende Alkalimenge richtet sich nach den gewünschten Substitutionsgraden und soll bei Molverhältnissen Alkali zu Cellulose von 1,5 bis 5 durchgeführt werden.

Die erfindungsgemäße Alkalisierung, die in kontinuierlich und diskontinuierlich geführter Fahrweise durchgeführt werden kann, weist mehrere Besonderheiten und zahlreiche Vorteile gegenüber bisher bekannten Verfahren auf.

Für die Durchführung des Verfahrens ist die Verwendung eines beliebigen inerten Lösungsmittels zweckmäßig, aber nicht notwendig. Die in der 6-bis 30-fachen, vorzugsweise 8- bis 13-fachen Menge an inerten Lösungsmitteln, wie beispielsweise Toluol oder Xylol oder Isopropylalkohol, suspendierte Pulvercellulose wird mit einem alkoholischen Alkalihydroxid umgesetzt. Als Alkalihydroxid gelangt vorzugsweise Natronlauge zum Einsatz, insbesondere in 50-%iger Form, während zur Verdünnung vorzugsweise Methanol und/oder Ethanol Verwendung finden sollen. Auch mit anderen Laugen und/oder Alkoholen werden gute Ergebnisse erzielt. Geeignet sind hier besonders Monoalkohole mit 1 bis 5 Kohlenstoffatomen im Molekül. Die vorzugsweise Anwendung des Systems Natronlauge/Methanol beruht auf wirtschaftlichen Überlegungen.

Die Alkalisierung wurde bei Temperaturen von 15° C bis zu 75° C vorgenommen. Je nach der Prozeßführung sowie nach geforderter Viskosität der Produkte variiert die optimale Alkalisierungstemperatur im genannten Bereich, vorzugsweise zwischen 25° C und 45° C. Bei Verwendung von alkoholischen Suspensionsmitteln, wie beispielsweise t-Butanol oder iso-Propanol, wird nur die konzentrierte Lauge zur Alkalisierung benötigt, da der anwesende Alkohol für eine homogene Verteilung sorgt.

Ein weiterer Vorteil der Benutzung eines alkoholischen Alkalihydroxids besteht darin, daß die Lauge augenblicklich und absolut gleichmäßig auf die suspendierte Pulvercellulose aufzieht. Nach diesem Verfahren wird eine völlig homogene Alkalicellulose in wenigen Sekunden beziehungsweise Minuten erhalten. Dabei erfolgt eine rasche und

/5

intensive Quellung der Cellulose.

Die kontinuierliche Alkalisierung wird beispielsweise in einem Homogenisator mit einer Rotor/Stator-Ausstattung durchgeführt. Dieser Homogenisator kann durch eine Kreiselpumpe ersetzt werden, ohne daß die Alkalicellulose ihre guten Eigenschaften einbüßt. Die Alkalisierung erfolgte in diesen Systemen in Bruchteilen von Sekunden und wurde durch eine überwiegende Rückführung der Suspension in den Sekundenbereich hin verlängert.

Die diskontinuierlich im Rührkessel durchgeführte Alkalisierung wird zweckmäßig während 1 Minute bis zu 1 Stunde durchgeführt. Je nach Ansatzgröße ergeben sich unterschiedliche Alkalisierungszeiten. Bewährt hat sich ein Alkalizulaufstrom von etwa 100 bis 500 kg/h zur Suspension. Die Alkalisierung wird auch im Rührkessel, vorzugsweise in Abwesenheit von Sauerstoff, durchgeführt, insbesondere, wenn hochviskose Produkte angestrebt werden.

Zwecks Verhinderung des oxidativen Abbaus des Cellulosemoleküls empfiehlt es sich, die Alkalisierung in einer Stickstoffatmosphäre vorzunehmen. Dazu kann Stickstoff in feinverteilter Form unter Druck durch die Suspension gedrückt werden. Diese Maßnahme allein reicht aber nicht aus, um den vorhandenen Sauerstoff zu entfernen. Sauerstoff ist nämlich auf der Oberfläche der äußerst feinverteilten Pulvercellulose adsorbiert und daher nur schwer zu entfernen.

Erfindungsgemäß wird daher die im Reaktionssystem vorhandene Luft, das heißt der Sauerstoff, durch die im Vakuum siedende Suspensionsflüssigkeit entfernt. Bei der kontinuierlichen Prozeßführung wird die Suspension der Alkalicellulose in einen unter Vakuum stehenden Rührkessel geflusht und bei der diskontinuierlichen Fahrweise Luft, das heißt Sauerstoff, mit dem siedenden Suspensionsmittel dem System bei reduziertem Druck entzogen. Je nach der Prozeßführung werden die Temperatur und der Druck für diese Entgasungsstufe variiert. Es ergeben sich im Bereich von 30 bis 100° C die entsprechenden Drücke von circa 30 Torr bis etwa Normaldruck. Vorzugsweise sollte die Entgasung bei Temperaturen von 40 bis 65° C unter siedender Flüssigkeit, das heißt mittels eines entsprechenden Vakuums, erfolgen. Infolge des alkalischen Abbaus im genannten Temperaturbereich kann eine Viskositätseinstellung erfolgen. Die verdampfte Flüssigkeit gelangt nach der Kondensation in Abhängigkeit von den geforderten Produkteigenschaften zumindest teilweise in den Reaktor zurück oder wird separat aufgearbeitet.

Ein weiteres wesentliches Merkmal der Erfindung ist die Entwässerung der Alkalicellulose. Sie kann gleichzeitig mit der Entgasung unter siedender bzw. abdestillierender Flüssigkeit ablaufen oder im Anschluß daran durchgeführt werden. Bei getrennter Arbeitsweise kann es zweckmäßig sein, die Entwässerung bei 10 bis 30° C höheren Temperaturen vorzunehmen.

In der Entwässerungs- sowie der Entgasungsstufe wird insbesondere beim Einsatz von nicht mit Wasser mischbaren Kohlenwasserstoffen sowohl Alkohol als auch überschüssiges Wasser durch Azeotropdestillation entfernt. Durch den Grad der Entwässerung kann der Substitutionsgrad je nach der eingesetzten Menge an Alkali stufenlos über einen weiten Bereich geregelt werden. So kann beispielsweise bei der Methylierung von Alkalicellulose für ein stöchiometrisches Einsatzgemisch der Methoxylsubstitutionsgrad im Bereich von 1,0 bis 1,9 nur durch den Grad der Entwässerung eingestellt werden. Die Entwässerung wird bei höher substituierten Produkten so durchgeführt, daß der Wassergehalt auf

/7

BAD ORIGINAL

etwa 2,5 bis 6,0 Mol Wasser pro Mol Anhydroglycoseeinheit, insbesondere 3,5 bis 4,0 Mol, abgesenkt wird. Das Molverhältnis Methylchlorid zu NaOH liegt vorzugsweise bei 1,0 bis 1,5, insbesondere bei 1,1 bis 1,3.

Die wie vorstehend beschrieben entgaste und entwässerte Alkalicellulose wird anschließend in an sich bekannter Weise alkyliert. Dabei kommen sowohl diskontinuierliche als auch kontinuierliche Verfahren in Betracht. Verschiedene Schritte zur Weiterverarbeitung der Alkalicellulose bieten sich an. So besteht die Möglichkeit, die Alkalicellulose selbst oder auch eine bereits voralkylierte Form weiter mit Methylchlorid und/oder Ethenoxid und/oder Propenoxid zu alkylieren. Weiterhin kann man die erfindungsgemäß hergestellte Alkalicellulose selbst oder die analkylierte Form mit Chloressigsäure beziehungsweise deren Alkalisalzen weiter umsetzen. Selbstverständlich ist es möglich, auch andere bekannte Reagentien, die eine Alkylierung bewirken, mit der erfindungsgemäß erhältlichen Alkalicellulose zur Reaktion zu bringen.

Ein weiteres Merkmal der Erfindung besteht darin, daß auch mit unterstöchiometrischem Einsatz an Natronlauge eine optimale Alkalisierung erreicht wird. Bei Bezeichnung des Molverhältnisses Natronlauge zu Anhydroglucose mit $\mu$ ergibt sich für ein stöchiometrisches Einsatzgemisch ein Zahlenwert von 3. Bereits bei $\mu$-Werten von 1,5 kann eine Alkalisierung erzielt werden, die die Herstellung von guten Produkten erlaubt. Überraschenderweise zeigte sich, daß mit Absenkung des Molverhältnisses Natronlauge zu Anhydroglucose die Substitutionsausbeute (Selektivität) stark ansteigt. Während die Selektivität in den bekannten Verfahren etwa 40 bis 50 % beträgt, kann sie im erfindungsgemäßen Verfahren durch Einstellen der optimalen

/8

Versuchsbedingungen auf Werte über 80 % gesteigert werden. Besonders wesentlich ist hierbei die Beobachtung, daß diese Werte sowohl für Methylchlorid als auch für Alkylenoxide erreicht wurden.

Die Einstellung der Viskosität ist im vorstehenden Verfahren besonders einfach. Erfindungsgemäß wird bei geringem Abbau der Viskosität die Entgasungszeit reduziert. Ein weitergehender Abbau ist durch die fehlende Entgasung und durch einen zusätzlichen thermischen Abbau der Alkalicellulose gekennzeichnet. Durch Wahl der Zeiten und Temperaturen ist es möglich, die Viskosität im Bereich von 500 bis 25.000 mPas auf ± 5 % genau einzustellen. Sind Viskositäten deutlich unter 500 mPas erwünscht, dann erhöht sich der relative Fehler auf ± 10 % und mehr.

Bei Einsatz der erfindungsgemäß hergestellten Alkalicellulose kann in der Umsetzung mit Methylchlorid auf einen Überschuß weitgehend verzichtet werden. Bezeichnet man das Molverhältnis Methylchlorid zu Natronlauge mit $\lambda$, so ist die Methylierungsreaktion auch mit stöchiometrischem Einsatz ($\lambda$ = 1) durchführbar, ohne daß große Qualitätseinbußen zu beobachten sind. In der Regel wird ein $\lambda$-Wert zwischen 1,05 bis 1,5 eingestellt, vorzugsweise 1,1 bis 1,3.

Die Überlegenheit der Produkte, die aus der erfindungsgemäß hergestellten Alkalicellulose synthetisiert wurden, geht beispielsweise daraus hervor, daß selbst niedrig substituierte Methylcellulosen, die sonst nur in Alkalien löslich sind, sich glatt in Wasser lösen. Dieser Sachverhalt läßt auf eine sehr gleichmäßige Substitution schliessen, die nur über eine völlig homogene Alkalisierung der Cellulose möglich ist. Außerdem können die derart alkalisierten Cellulosen sehr leicht gleichzeitig misch- verethert werden, wobei Produkte mit interessanten Löseeigenschaften entstehen. Auch alle anderen Mischveretherungen sind möglich.

Im folgenden wird die Erfindung beispielhaft erläutert.

/10

BAD ORIGINAL

0023292

HENKEL KGaA
ZR-FE/Patente

Beispiel 1

80 kg feinpulvrige Fichtencellulose (40 bis 60 µm) wurden in 1000 l Toluol suspendiert, anschließend mit 126 kg 50-%iger Natronlauge und 50 kg Methanol alkalisiert. Die Entgasung der Alkalicellulose durch Anlegen eines Vakuums von etwa 100 Torr fand bei 30° C statt, während die folgende Entwässerung unter Sieden bei 30 bis 60° C durchgeführt wurde. Im Anschluß an diese Entwässerung, mit der dem System 400 l Flüssigkeit entzogen wurden, gelangten zunächst 14 kg Ethylenoxid und dann 96 kg Methylchlorid in den Reaktionskessel. Die Reaktionen liefen nach einem Temperaturprogramm zwischen 60 und 120° C mit 99,5-%igem Umsatz ab.

Hierbei stellte sich ein maximaler Überdruck von 6,4 bar ein. Eine Methylhydroxyethylcellulose mit den folgenden Qualitätsmerkmalen wurde nach der Entfernung des Kochsalzes erhalten:

| | |
|---|---|
| Viskosität (2-%ige Lösung) | 25.000 mPa.s |
| Trübungszahl | 15 % |
| Flockungspunkt | 75° C |
| Methoxylwert | 26,1 % |
| Hydroxyethylwert | 8,7 % |

Beispiel 2

40 kg Cellulosepulver wurden pro Stunden in 440 kg Toluol in einem Behälter kontinuierlich angemaischt. Mit der 33 % NaOH enthaltenden wäßrig-methanolischen Natronlauge (74 kg/h) erfolgte die spontane Bildung von Alkalicellulose bei 35 bis 40° C. In einem weiteren Rührbehälter fand die Entgasung und Entwässerung statt. Bei dieser kontinuierlichen Arbeitsweise erfolgen beide Vorgänge in einer Stufe unter Sieden der Suspensionsflüssigkeit bei etwa

/11

BAD ORIGINAL

50° C im schwachen Vakuum. Dadurch wurden dem System 100 l Flüssigkeit pro Stunden entzogen. Nach Zugabe von 2 kg Ethylenoxid und 35 kg Methylchlorid erfolgte die Alkylierung bei 95 bis 130° C in einem aus Rohrreaktor und Rührkolonne bestehenden Reaktorsystem. Die folgenden Produkteigenschaften wurden festgestellt:

| | |
|---|---|
| Viskosität | 12.800 mPa.s |
| Trübungszahl | 58 % |
| Flockungspunkt | 74° C |
| Methoxylwert | 23 % |
| Hydroxyethylwert | 3,2 % |

Beispiel 3

40 kg Cellulosepulver wurden pro Stunde in 400 kg 85-%igem wäßrigen Isopropylalkohol suspendiert. Nach kontinuierlicher Zudosierung der Reaktionspartner im Molverhältnis 1,0 : 1,4 : 1,31 (Cellulose, NaOH, Natriummonochloracetat) erfolgte die Umsetzung zur Carboxymethylcellulose in einer drucküberlagerten gerührten Kolonne. Die Reaktionszeit betrug bei 95 bis 110° C 20 Minuten. Das synthetisierte, mit IPA/Wasser salzfrei gewaschene Produkt war praktisch quellkörperfrei.

| | |
|---|---|
| Viskosität | 3.900 mPa.s |
| Trübungszahl (3,5 cm Schichtdicke) | 8 % |
| Substitutionsgrad | 0,96 |

Beispiel 4

80 kg Pulvercellulose wurden nach Suspendieren in 1,2 m³ Toluol mit 79 kg 50-%iger Natronlauge unter Zusatz von circa 48 kg Methanol im diskontinuierlichen Rührkessel alkalisiert. Nach der Entgasung/Entwässerung, die analog

/12

0023292
HENKEL KGaA
ZR-FE/Patente

dem Beispiel 1 durchgeführt wurde, erfolgte die Alkylierung mit 2,2 kg Ethylenoxid und 60 kg Methylchlorid. Der Druck im Reaktionsbehälter stieg bei 130° C auf etwa 4 bar Überdruck an.

Die synthetisierte Methylhydroxyethylcellulose wies die folgenden Qualitätsmerkmale auf:

| | |
|---|---|
| Viskosität | 22.000 mPas |
| Trübungszahl | 28 % |
| Flockungspunkt | 81° C |
| Methoxylwert | 23,7 % |
| Hydroxyethylwert | 3,2 % |

## Verfahren zur Herstellung von Cellulosederivaten mittels besonders reaktiver Alkalicellulose

__Patentansprüche:__

1. Verfahren zur Herstellung von Cellulosederivaten durch Umsetzen von Alkalicellulose mit Veretherungsreagentien, dadurch gekennzeichnet, daß feinverteilte, insbesondere pulverförmige Cellulose mit wäßrigalkoholischer Alkalilauge bei Temperaturen zwischen etwa 20 und 120° C, insbesondere 20 und 80° C, in Alkalicellulose überführt wird, die nach Entfernen des Sauerstoffs sowie Absenken des Wassergehaltes auf 2,5 bis 6,0 Mol pro Anhydroglycoseeinheit in an sich bekannter Weise alkyliert sowie aufgearbeitet wird.

2. Verfahren nach Anspruch 1, dadurch gekennzeichnet, daß Pulvercellulose eingesetzt wird, die einen mittleren Korndurchmesser zwischen 20 und 120 $\mu$m, vorzugsweise zwischen 40 und 60 $\mu$m, aufweist.

3. Verfahren nach Anspruch 1 und 2, dadurch gekennzeichnet, daß niedere primäre und/oder sekundäre Monoalkohole mit 1 bis 5 Kohlenstoffatomen, insbesondere Methanol und/oder Ethanol bei der Alkalisierung verwendet werden.

4. Verfahren nach Anspruch 1 bis 3, dadurch gekennzeichnet, daß die Alkalisierung mit Molverhältnissen Alkalilauge zu Cellulose von 1,5 bis 5 durchgeführt wird.

5. Verfahren nach Anspruch 1 bis 4, dadurch gekennzeichnet, daß die Viskositätseinstellung durch eine zeitlich eingeschränkte Entgasung und/oder durch einen alkalischen Abbau im Temperaturbereich von 30 bis 100° C, vorzugsweise 40 bis 65° C, erfolgt.

6. Verfahren nach Anspruch 1 bis 5, dadurch gekennzeichnet, daß für eine Methylierung ein Molverhältnis Methylchlorid zu Natronlauge von 1,0 bis 1,5, vorzugsweise 1,1 bis 1,3, eingestellt wird.

7. Verfahren nach Anspruch 1 bis 6, dadurch gekennzeichnet, daß man die Entfernung des überschüssigen Wassers und Alkohols in Gegenwart von inerten, mit Wasser nicht mischbaren Flüssigkeiten, wie beispielsweise Toluol oder Xylol, durchführt.

8. Verfahren nach Anspruch 1 bis 7, dadurch gekennzeichnet, daß die Alkalisierung sowie die anschließenden Alkylierungen in Gegenwart der inerten Flüssigkeiten in kontinuierlicher Fahrweise vorgenommen wird.

9. Verfahren nach Anspruch 1 bis 8, dadurch gekennzeichnet, daß Alkalicellulose oder mit Monochloressigsäure teilweise umgesetzte Alkalicellulose mit Methylchlorid und/oder Ethenoxid und/oder Propenoxid alkyliert wird.

10. Verfahren nach Anspruch 1 bis 9, dadurch gekennzeichnet, daß Alkalicellulose oder analkylierte Alkalicellulose mit Chloressigsäure beziehungsweise deren Alkalisalz alkyliert wird.

**Europäisches Patentamt**

# EUROPÄISCHER RECHERCHENBERICHT

Nummer der Anmeldung

EP 80 10 3952

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | COMPTES RENDUS HEBDOMADAIRES DES SEANCES DE L'ACADEMIE DES SCIENCES, Band 238, 1954, Paris, FR, A. WEBER et al.: "Action de la soude sur la cellulose en milieux alcooliques, anhydres et hydroalcooliques", Seiten 1318-1320<br><br>* Das ganze Dokument * | 1 |
| | GB - A - 200 816 (LEON LILIENFELD)<br>* Seite 2, Zeilen 105-122; Ansprüche * | 1-10 |
| | GB - A - 546 647 (HENRY DREYFUS)<br>* Ansprüche * | 1-10 |
| A | US - A - 2 619 483 (MERLYN HERBERT WILCOX) | |
| | BE - A - 458 917 (ICI)<br>*. Ansprüche * | 1-10 |

-----

**KLASSIFIKATION DER ANMELDUNG (Int.Cl. 3)**

C 08 B 1/08

**RECHERCHIERTE SACHGEBIETE (Int. Cl. 3)**

C 08 B 1/08
11/00
11/08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort: | Abschlußdatum der Recherche | Prüfer |
|---|---|---|
| Den Haag | 10-11-1980 | LENSEN |

EPA form 1503.1 06.78